# EUROPEAN PATENT APPLICATION

(11) **EP 2 213 439 A1**
(43) Date of publication of application: **04.08.2010**
(21) Application number: 09007848.6
(22) Date of filing: 15.06.2009
(51) Int. Cl.: B29C 44/04, B29C 44/12, A43B 13/18, B29D 35/00, B29D 35/14, B29C 44/08

(54) **Method for making a foamed sole**

(30) Priority: 12.01.2009 TW 98100922
(71) Applicant: SKYJOY INTERNATIONAL LIMITED, Apiax (WS)
(72) Inventor: Tsai, Wen-Kuo, Mingjian Township Nantou County (TW)
(74) Representative: Schoppe, Fritz

(57) **Abstract**

A method for making a foamed sole includes the steps of: a) preparing a mold (10) having a lower mold part (11) and an upper mold part (12) removably covering the lower mold part (11), the lower mold part (11) having atop surface (111) and a lower mold cavity (112) recessed from the top surface (111), the upper mold part (12) having a bottom surface (121) to contact the top surface (111) of the lower mold part (11), and an upper mold cavity (122) recessed from the bottom surface (121); b) filling and molding a first molding material in the upper mold part (12) to form a first sole portion (100); and c) filling and molding a second molding material in the lower mold part (11) to form a second sole portion (200) having a hardness smaller than that of the first sole portion (100) and bonding directly with the first sole portion (100).

## Description

The invention relates to a method for making a sole, more particularly to a method for making a foamed sole.

A resilient sole is generally formed by molding a foaming material. Therefore, the foamed sole has uniform resilience at all parts thereof. That is, the flexibility of the sole is identical at all levels thereof, and thus the application of the sole is limited.

A conventional composite sole composed of two layers having different hardness is made by separately molding the layers and adhering the layers together using glue to form the composite sole. Although the comfort of the composite sole is improved, the respective layers of the sole are liable to separate from each other due to that fact that they are bound to each other merely using glue. Furthermore, the process for making the sole is relatively costly and complicated since an adhering step is required.

Therefore, the object of the present invention is to provide a method for making a foamed sole, in which the layers having different hardness for forming the foamed sole can be integrated with each other without using glue.

The method for making a foamed sole according to this invention includes the steps of: a) preparing a mold having a lower mold part and an upper mold part removably covering the lower mold part, the lower mold part having a top surface and a lower mold cavity recessed from the top surface, the upper mold part having a bottom surface to contact the top surface of the lower mold part, and an upper mold cavity recessed from the bottom surface; b) filling and molding a first molding material in the upper mold part to form a first sole portion; and c) filling and molding a second molding material in the lower mold part to form a second sole portion having a hardness smaller than that of the first sole portion and bonding directly with the first sole portion.

Other features and advantages of the present invention will become apparent in the following detailed description of the preferred embodiments with reference to the accompanying drawings, of which:
Figures 1 to 5 are sectional views showing consecutive steps of a first preferred embodiment of a method for making a foamed sole according to this invention; and
Figures 6 to 8 are sectional views showing consecutive steps of a second preferred embodiment of a method for making a foamed sole according to this invention.

Before the present invention is described in greater detail, it should be noted that like elements are denoted by the same reference numerals throughout the disclosure.

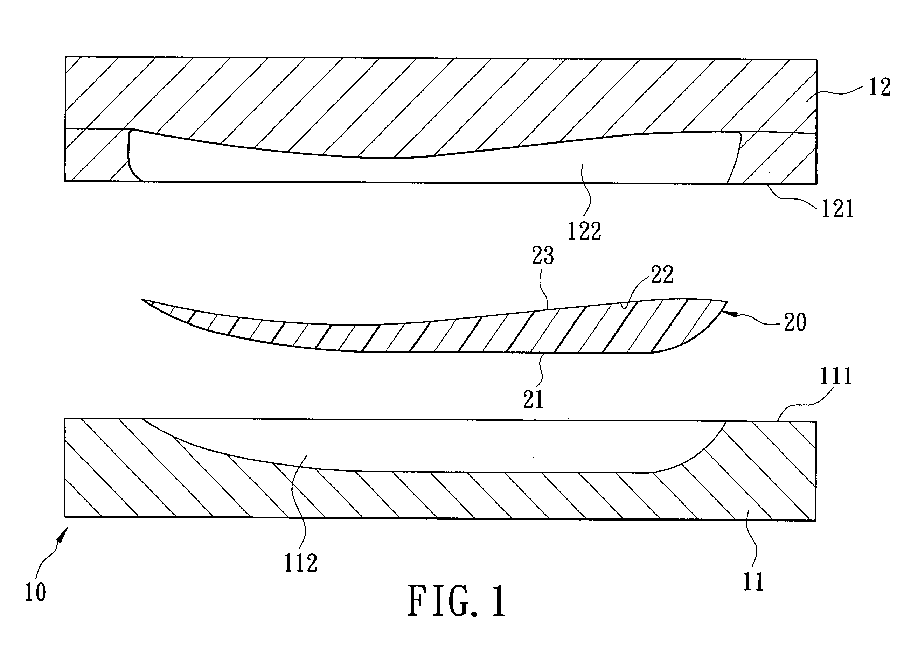

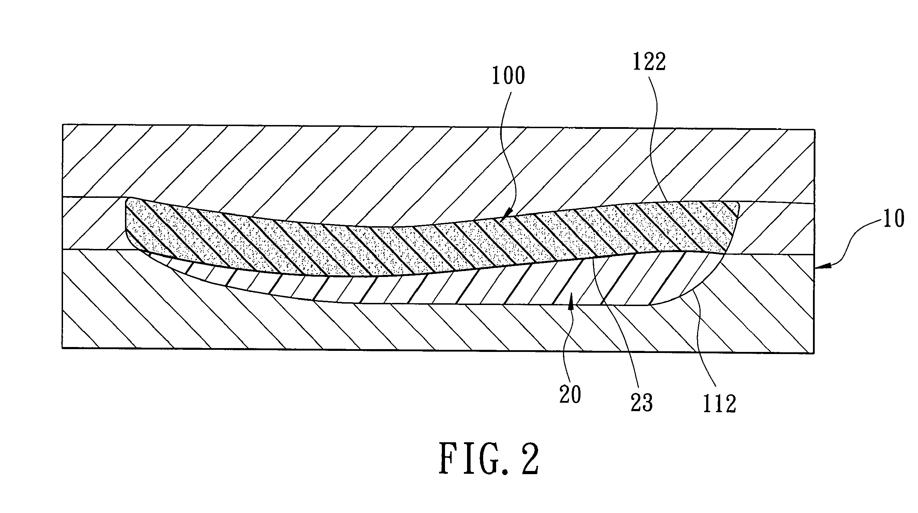

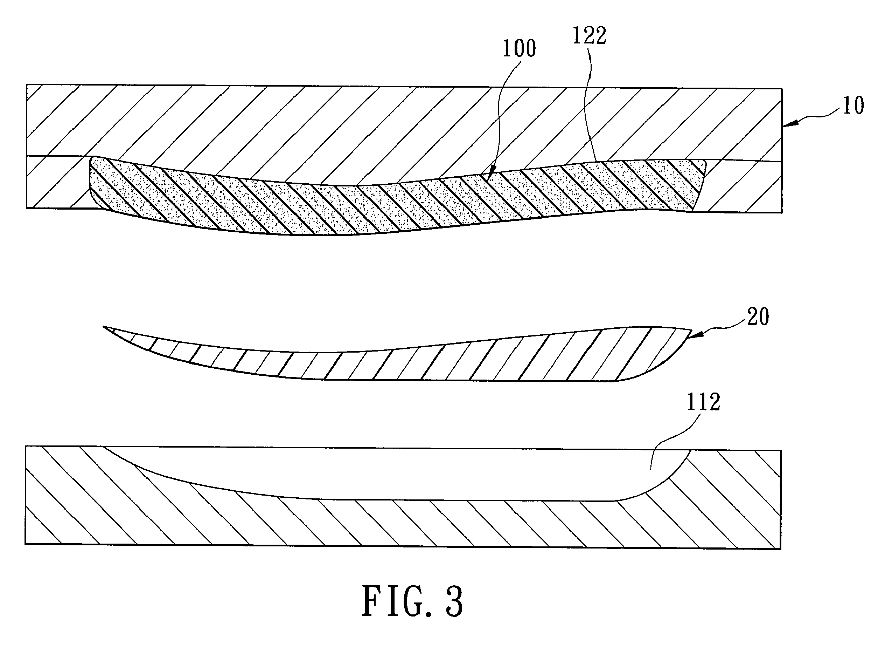

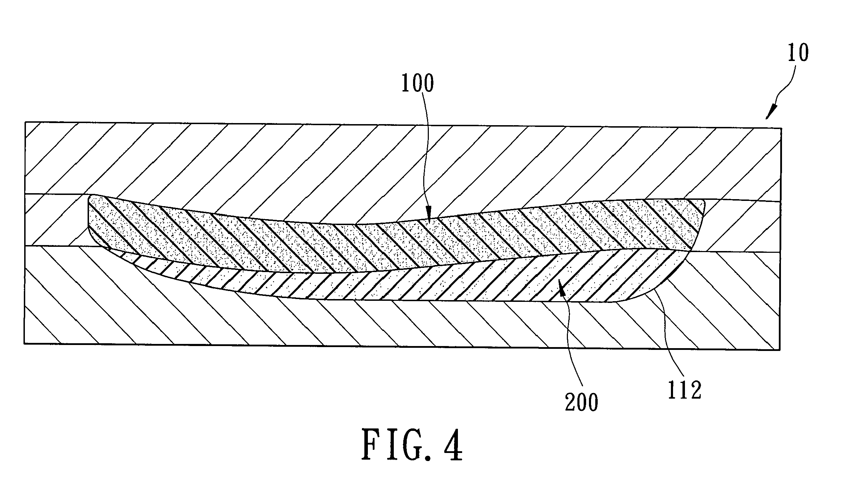

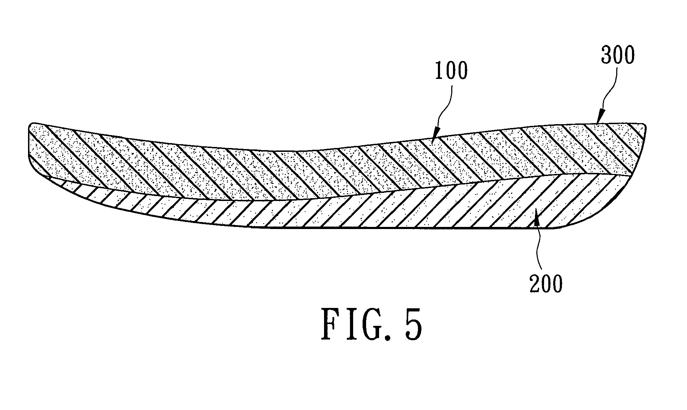

Referring to Figures 1 to 5, the first preferred embodiment of the method for making a foamed sole includes the steps of:
A) preparing a mold 10 and a filling member 20:
   The mold 10 has a lower mold part 11 and an upper mold part 12 removably covering the lower mold part 11. The lower mold part 11 has a top surface 111 and a lower mold cavity 112 recessed from the top surface 111. The upper mold part 12 has a bottom surface 121 to contact the top surface 111 of the lower mold part 11, and an upper mold cavity 122 recessed from the bottom surface 121.
   The filling member 20 can be used repeatedly, has a constant shape, and is heat resistant. The filling member 20 can fill completely the lower mold cavity 112 of the lower mold part 11, and includes a bottom surface 21, a top surface 22, and a release layer 23 provided on the top surface 22. In this embodiment, the filling member 20 is made of a polyurethane material. Alternatively, the filling member 20 can be made of other materials that are heat resistant and that have shrinkage substantially identical to that of the polyurethane material.
B) filling the lower mold cavity 112:
   The lower mold cavity 112 of the lower mold part 11 is filled with the filling member 20, and the upper mold part 12 covers the lower mold part 11 so that the release layer 23 is proximate to the upper mold cavity 122 of the upper mold part 12.
C) filling and molding a first molding material:
   The first molding material, such as a polyurethane material, is filled and molded in the upper mold cavity 122 of the upper mold part 12 so as to form a first sole portion 100. Preferably, the first sole portion 100 is formed by molding the polyurethane material at a mold cavity temperature ranging from 60 to 70°C.
D) removing the filling member 20:
   The mold 10 is opened, and the filling member 20 is removed from the lower mold cavity 112 of the lower mold part 11. The first sole portion 100 is still positioned in the upper mold cavity 122 of the upper mold part 12 at this time.
E) filling and molding a second molding material:
   The mold 10 is closed, and the second molding material, such as a polyurethane material, is filled and molded in the lower mold cavity 112 of the lower mold part 111 so as to form a second sole portion 200, which has a hardness smaller than that of the first sole portion 100 and which bonds directly with the first sole portion 100. Preferably, the second sole portion 200 is formed by molding the polyurethane material at a mold cavity temperature ranging from 60 to 70°C.
   Preferably, the first sole portion 100 has a hardness ranging from 60 to 75. More preferably, the hardness of the first sole portion 100 is 70. Preferably, the second sole portion 200 has a hardness ranging from 20 to 35. More preferably, the hardness of the second sole portion 200 is 25. The hardness is measured by a hardness tester (Asker Shore C).
F) opening the mold 10:
   The mold 10 is opened so as to obtain a foamed sole 300 composed of the first and second sole portions 100, 200 bonding directly to each other.
   The polyurethane materials suitable for the making the first and second sole portions 100, 200 can be a polyether type of polyurethane or a polyester type of polyurethane, and the former is preferable.
   In view of the aforesaid, the foamed sole 300 composed of the first and second sole portions 100, 200 having different hardness and bonding directly to each other can be simply made by the method of this invention using the mold 10. Therefore, the production cost is reduced, and the industrial utility is increased.
   It should be noted that, if the second sole portion 200, which has a hardness smaller than that of the first sole portion 100, is molded prior to the first sole portion 100, the bonding of the first sole portion 100 to the second sole portion 200 will be unsatisfactory due to the molding conditions, gravity, etc. of the first sole portion 100 during the molding of the first sole portion 100. Therefore, in the method for making a foamed sole of this invention, the first sole portion 100 is first molded in the upper mold cavity 122 of the upper mold part 12. In this embodiment, the filling member 20 is provided to support the first sole portion 100 during the molding of the first sole portion 100.

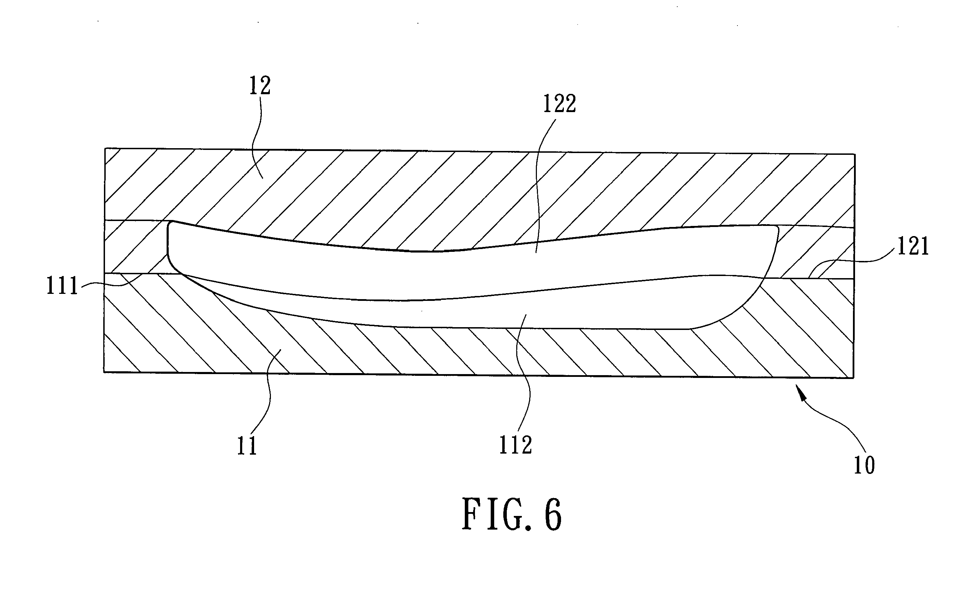

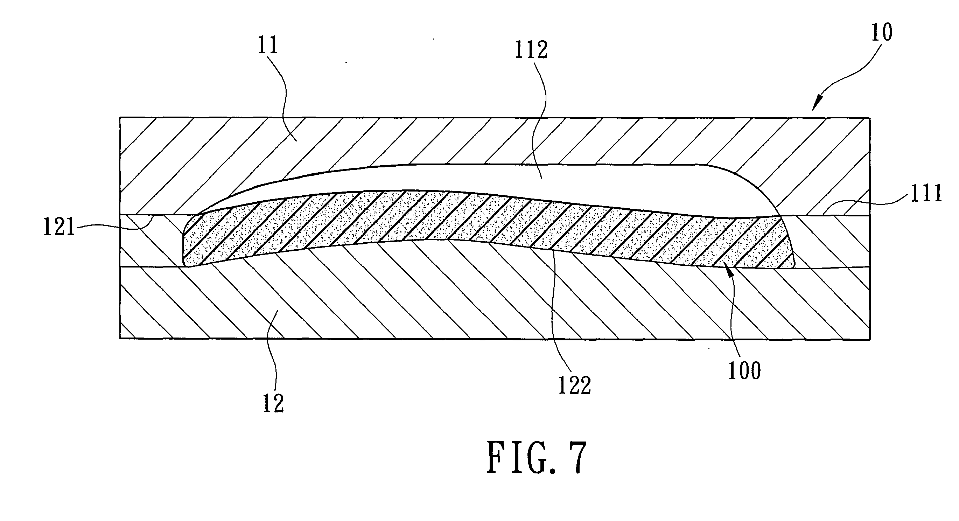

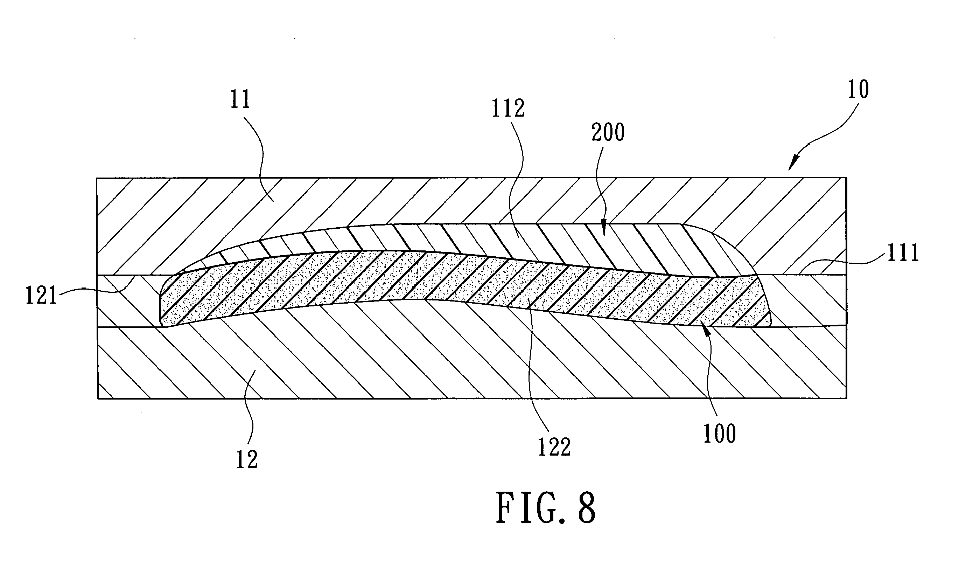

Referring to Figures 6 to 8, the second preferred embodiment of the method for making a foamed sole includes the steps of:
A) preparing a mold 10:
   The mold 10 used in this preferred embodiment is identical to that used in the first preferred embodiment, and has a lower mold part 11 and an upper mold part 12 removably covering the lower mold part 11. The lower mold part 11 has a top surface 111 and a lower mold cavity 112 recessed from the top surface 111. The upper mold part 12 has a bottom surface 121 to contact the top surface 111 of lower mold part 11, and an upper mold cavity 122 recessed from the bottom surface 121.
B) inverting the mold 10:
   The mold 10 is inverted so that the positions of the upper and lower mold parts 12, 11 are reversed, that is, the lower mold part 11 is positioned on the upper mold part 12.
C) filling and molding a first molding material:
   The first molding material is filled and molded in the upper mold cavity 122 of the upper mold part 12 so as to form a first sole portion 100.
D) filling and molding a second molding material:
   The second molding material is filled and molded in the lower mold cavity 112 of the lower mold part 111 so as to form a second sole portion 200, which has a hardness smaller than that of the first sole portion 100 and which bonds directly with the first sole portion 100. In this step, the first sole portion 100 is formed under the second sole portion 200.
E) opening the mold 10:
   The mold 10 is opened so as to obtain a foamed sole 300 composed of the first and second sole portions 100, 200 bonding directly to each other, as best shown in Figure 8.
   In the second preferred embodiment, the first sole portion 100 having a relatively large hardness is molded prior to the second sole portion 200 by inverting the mold 10 so as to obtain the foamed sole 300 in which the first and second sole portions 100, 200 bond satisfactorily to each other.

## Claims

1. A method for making a foamed sole, **characterized by** the steps of:
a) preparing a mold (10) having a lower mold part (11) and an upper mold part (12) removably covering the lower mold part (11), the lower mold part (11) having a top surface (111) and a lower mold cavity (112) recessed from the top surface (111), the upper mold part (12) having a bottom surface (121) to contact the top surface (111) of the lower mold part (11), and an upper mold cavity (122) recessed from the bottom surface (121);
b) filling and molding a first molding material in the upper mold part (12) to form a first sole portion (100); and
c) filling and molding a second molding material in the lower mold part (11) to form a second sole portion (200) having a hardness smaller than that of the first sole portion (100) and bonding directly with the first sole portion (100).

2. The method as claimed in Claim 1, further **characterized by**:
a step of filling the lower mold cavity (112) with a filling member (20) prior to the step b), and
a step of removing the filling member (20) between the step b) and the step c).

3. The method as claimed in Claim 2, **characterized in that** the filling member (20) fills completely the lower mold cavity (112) and includes a release layer (23) provided on a top surface (22) thereof.

4. The method as claimed in Claim 1, **characterized in that** the step b) is conducted at a mold cavity temperature ranging from 60 to 70 °C.

5. The method as claimed in Claim 1, **characterized in that** the first molding material and the second molding material are selected from the group consisting of a polyether type of polyurethane and a polyester type of polyurethane.

6. The method as claimed in Claim 1, further **characterized by**:
a step of inverting the mold (10) so that the positions of the upper and lower mold parts (12, 11) are reversed, wherein one of the first and second sole portions (100, 200) is thereafter inverted to permit forming of the other one of the first and second sole portions (100, 200) thereunder.
